# EUROPÄISCHE PATENTANMELDUNG

(11) **EP 0 584 507 A2**
(43) Veröffentlichungstag der Anmeldung: **02.03.1994**
(21) Anmeldenummer: 93111154.6
(22) Anmeldetag: 13.07.1993
(51) Int. Cl.: D21C 5/02

(54) **Verfahren zur Abtrennung von Druckfarben aus Verbundfolien**

(30) Priorität: 01.08.1992 DE 4225505
(71) Anmelder: RWE Entsorgung Aktiengesellschaft, D-45141 Essen (DE)
(72) Erfinder: Van Halteren, Marcus Dr., D-45138 Essen (DE); Winkler, Dieter Dr., D-50389 Wesseling (DE)

(57) **Zusammenfassung**

Die vorliegende Erfindung betrifft ein Verfahren zur Abtrennung von Druckfarben aus Verbundmaterialien, die wenigstens eine bedruckte Schicht enthält, durch behandeln des Verbundfolienmaterials mit einer Flüssigkeit unter Bedingungen, bei denen die Folien im wesentlichen ungelöst bleiben und sich die Druckfarben und/oder Druckfarben aufweisende Folie von den übrigen Verbundfolienkomponenten abtrennen und in der Flüssigkeit aufgrund ihrer Dichte nach oben steigen.

## Beschreibung

Die vorliegende Erfindung betrifft ein Verfahren zur Abtrennung von Druckfarben aus Verbundmaterialien, die bedruckte und nicht bedruckte Folien enthalten, durch Behandeln der Verbundmaterialien mit einer Flüssigkeit unter Bedingungen, bei denen die Folien im wesentlichen ungelöst bleiben und sich die Druckfarben und oder die Druckfarben aufweisende Folie von den übrigen Verbundfolienkomponenten abtrennen und in der Flüssigkeit aufgrund ihrer Dichte nach oben steigen.

Verbundwerkstoffe sind als Verpackungsmaterialien z. B. für Kaffee, Tee, Zahnpasta, Chemikalien, Getränke und andere in großen Mengen auf dem Markt. Metallfolien in solchen Verbundwerkstoffen bestehen meistens aus Aluminium, während die Beschichtung aus zahlreichen Kunststoffen bestehen kann. Beispielhaft seien Folien aus verschiedenen Polyethylentypen, aus Polypropylen, aus Polyestern, aus Polykarbonaten, aus Copolymeren wie z. B. Ethylen-Vinylacetat, Ethylen-Propylen, aus Polyvinylchlorid oder aus Epoxydharzen genannt. Auch mehrschichtige Verbundstoffe, die Folien aus verschiedenen Kunststoffen enthalten, sind auf dem Markt. Ferner kann die Metallfolie mit Cellulose enthaltenden Materialien z. B. mit Papier beschichtet sein. Ebenso können Papierbeschichtungen kombiniert mit Kunststoffschichten vorliegen. Die Folien können mit oder ohne Kleber bzw. Haftvermittler miteinander verbunden sein oder auch miteinander verpreßt sein. Metall enthaltende Verbundwerkstoffe werden jedoch nicht nur als Verpackungsmaterial eingesetzt. Beispiele außerhalb des Verpackungsbereiches sind Kabel, ummantelte Drähte, Verschlußdeckel, mit Kunststoffen ummantelte Gebrauchsgegenstände, wie z. B. Türgriffe oder Werkzeuge, ferner elektrische Geräte, Leiterplatten und zahlreiche andere Gebrauchsgegenstände.

Die Rückgewinnung von Metallen aus Verbundwerkstoffen, insbesondere aus Aluminium-Laminaten ist von erheblicher wirtschaftlicher Bedeutung. Sie ist von um so größerem Interesse, je wertvoller das Metall ist, so besteht auch an der Rückgewinnung von Kupfer erhebliches Interesse. Ein wichtiger Gesichtspunkt zur Rückgewinnung kann auch das Abtrennen der Metalle aus Umweltgründen sein, da bekanntlich Schwermetalle bei der Verbrennung der gesamten Verbundwerkstoffe in kleinen Mengen in die Atmosphäre gelangen.

Aus Verbundwerkstoffen, die eine Papierschicht enthalten, wird dieser schichtbildende langfaserige Zellstoff bereits im großen Umfang in Papierfabriken durch Behandeln mit Dampf oder Wasser zurückgewonnen. Auch die Rückgewinnung der Thermoplastmaterialien in den Verbundwerkstoffen, insbesondere des in großen Mengen als Folien eingesetzten Polyethylens ist von wirtschaftlicher Bedeutung.

In der PCT-Patentanmeldung PCT/DE 91/00 682 wird ein Verfahren zur Rückgewinnung von Metallen und Beschichtungsmaterialien aus Verbundwerkstoffen beschrieben, gemäß dem mit bestimmten Lösungsmitteln, insbesondere mit C₉-C₁₀-Aromaten, das Polyethylenfolienmaterial gelöst wird, nachdem die Papierschicht zunächst entfernt worden ist, so daß die Metallfolie, die üblicherweise aus Aluminium besteht, in reiner Form, praktisch quantitativ gewonnen werden kann. Durch Entfernen des Lösungsmittels aus der Polyethylenlösung kann das Polyethylen mit Hilfe eines unter Vakuum arbeitenden Extruders als Granulat ebenfalls nahezu quantitativ zurückgewonnen werden.

Obgleich dieses von der gleichen Anmelderin angemeldete Patent eine beispielhafte Recyclingtechnologie offenbart, können nach diesem Verfahren Druckfarben nicht abgetrennt werden, so daß das wiedergewonnene Polyethylengranulat je nach Aufdruck Verfärbungen aufweist. Unter Druckfarben werden nicht nur Farben, sondern auch schwarze und weiße Aufdrucke verstanden.

Es bestand daher die Aufgabe, ein Rückgewinnungsverfahren für die Komponenten der Verbundfolien zu finden, bei dem die Druckfarben vom überwiegenden Teil des Verbundmaterials abgetrennt werden können.
Dies ist der Anmelderin in überraschender Weise durch ein Verfahren zur Abtrennung von Druckfarben aus Verbundmaterialien gelungen, wobei eine in den Verbundmaterialien ggf. vorhandene Papierschicht bevorzugt zunächst durch Wasser- und/oder Dampfanwendung abgetrennt wird, dadurch gekennzeichnet, daß das Verbundmaterial mit einer Flüssigkeit behandelt wird, in welcher sich die Druckfarben und/oder die Druckfarben aufweisende Folie von den übrigen Verbundmaterialien abtrennen und in der Flüssigkeit nach oben steigen.

Die folgende nähere Erläuterung des Verfahrens geht von Verbundmaterial, insbesondere von Verbundfolienmaterial aus, aus dem der ggf. ursprünglich vorhandene Papieranteil entfernt worden ist.

In Figur 1 ist eine erfindungsgemäß arbeitende Trennvorrichtung dargestellt.

In Figur 2 ist eine Anlage zur Aufarbeitung von Verbundmaterial dargestellt, die eine erfindungsgemäß arbeitende Trennvorrichtung aufweist.

Verbundfolien sind sehr häufig aus einer Aluminiumfolie und meist mehreren Polyethylenfolien oder Polypropylenfolien aufgebaut. Auch sonstige Thermoplaste wie Polyester, Polyvinylchlorid u. a. werden zu bestimmten Verwendungszwecken eingesetzt. Anwendungen solcher Verbundmaterialien wurden bereits eingangs erläutert. Hier ist besonders der Verpackungsbereich zu nennen. Verpackungen sind üblicherweise bedruckt, wobei sich die Bedruckung im allgemeinen auf der Papierschicht oder auf der Aussenseite der an die Papierschicht angrenzenden äußeren Thermoplastfolie befindet. Die verschiedenen Folien sind entweder miteinander verklebt oder zusammengepreßt. Versucht man, das Folienmaterial mit einem geeigneten Lösungsmittel bei geeigneter Temperatur aufzulösen, um die reine Aluminiumfolie zu gewinnen, so löst sich nicht nur die äußere Thermoplastfolie, sondern der gesamte Thermoplastfolienanteil des Verbundmaterials auf.
Die Druckfarben sind im allgemeinen Pigmente in Polyacrylat oder anderen Trägern die auch Haft- bzw. Klebeeigenschaften haben. Der Aufdruck kann sich auf der Papierschicht des Verbundmaterials befinden oder außen auf der auf der Papierschicht aufliegenden Thermoplast-Folie, gewöhnlich handelt es sich um eine Polyethylenfolie.

Wird das Verbundabfallmaterial zur Gewinnung des Papierzellstoffs mit Wasser und/oder Dampf behandelt, so dringt das Wasser in die Papierschicht ein, wobei sich der Zellstoff von dem sonstigen Verbundmaterial trennt und einer Wiederverwendung zugeführt werden kann. Da die Druckfarbe im Falle der Bedruckung der Papierschicht aufgrund ihre Klebeeigenschaften zumindest teilweise an der Innenseite der äußeren Polyethylenfolie haftet, haften häufig auch geringe Anteile an Zellstoff an der Druckfarbe bzw. der Folie.

Nach Abtrennen des Papiers liegt ein Gemisch von Druckfarbe, bedruckter Folie und sonstigem Verbundmaterial vor.

Überraschend hat die Anmelderin gefunden, daß zahlreiche Flüssigkeiten in der Lage sind, in einem Temperaturbereich unterhalb der Auflösungstemperatur Druckfarbe und noch Druckfarbe aufweisende Folie von dem übrigen Verbundmaterialanteil abzutrennen.

Dieses Gemisch ist spezifisch leichter als der übrige Verbundfolienanteil, in dem sich die Aluminiumfolie und der überwiegende Thermoplastanteil des Verbundmaterials befinden. Es hat sich überraschend gezeigt, daß der Dichteunterschied bei richtiger Wahl der Trennflüssigkeit, begünstigt durch die Einstellung einer bestimmten Strömungsgeschwindigkeit der Flüssigkeit in der Trennvorrichtung dazu ausreicht, daß das Gemisch aus äußerer Druckfarbe aufweisender Folie und Farbpartikeln in der Flüssigkeit nach oben steigt und von dem Verbundfolienanteil der die Metallfolie enthält, praktisch quantitativ getrennt werden kann, da Letzterer in der Flüssigkeit nach unten sinkt. Nach Abtrennung des die Metallfolie enthaltenden Anteils kann aus diesem das Thermoplastfolienmaterial in Lösung gebracht werden, wobei man nach Aufarbeitung der Lösung ein farbstofffreies Thermoplastgranulat und reines Aluminium gewinnen kann. Das Thermoplast/Druckfarbengemisch kann als gefärbtes Produkt minderer Qualität für entsprechende Anwendungen eingesetzt werden. Zahlreiche Flüssigkeiten sind für das erfindungsgemäße Verfahren geeignet, insbesondere organische Lösungsmittel oder deren Gemische, aber auch Wasser oder Gemische von Wasser mit anderen Flüssigkeiten oder Lösungen können erfindungsgemäß eingesetzt werden.

Beispielhaft seien aromatische und aliphatische Kohlenwasserstoffe genannt mit etwa 4 - 18 C-Atomen. Aber auch Äther, Ketone, Ester, Alkohole und andere können eingesetzt werden.

Erfindungsgemäß besonders geeignete Flüssigkeiten sind Alkylaromaten, wie Toluol, Xylole, Ethylbenzol, Isopropyl- und Propylbenzol, methylierte bzw. alkylierte C₉- und C₁₀-Aromaten und Gemische solcher Lösungsmittel. Diese haben den zusätzlichen Vorteil, daß sie nach Abtrennen der bedruckten Folie und der Druckfarben dazu verwendet werden können, den mit der Metallfolie verbundenen Folien-Anteil nach Temperaturerhöhung aufzulösen, so daß die reine Metallfolie die im allgemeinen aus Aluminium besteht gewonnen werden kann. Nach Entfernen des Lösungsmittels kann das farbstoffreie Thermoplastmaterial ebenfalls gewonnen werden, im allgemeinen als Granulat.

Technische C₈-C₁₀-Aromatenschnitte fallen beispielsweise in Xylolanlagen, Ethylenanlagen und Platformern an. Ein gemischter C₉-C₁₀-Schnitt kann z. B. ca. 15 % C₉-Aromaten, ca. 75 % C₁₀-Aromaten und ca. 10 % > C₁₀-Aromaten enthalten, wobei auch unterschiedliche Mengen z. B. 15 - 25 % an Nichtaromaten enthalten sein können. Erfindungsgemäß kann die Konzentration der einzelnen Komponenten in den technischen Schnitten in weiteren Grenzen variieren.

Die Temperatur, bei der die bedruckte Folie und die Druckfarben abgetrennt werden, sollte so tief liegen, daß sich der Thermoplastanteil im Verbundmaterial nicht oder zumindest nur geringfügig auflöst.

Da die Trennung der beiden Verbundfolienanteile aufgrund unterschiedlicher Dichten erfolgt, können grundsätzlich alle Vorrichtungen eingesetzt werden, in denen nach diesem Prinzip gearbeitet werden kann. Beispielhaft können dies Klassier-, Dekantier-, Zentrifugier- und andere Trennvorrichtungen sein. Da dem Fachmann solche Vorrichtungen bekannt sind, sollen sie hier nicht im einzelnen genannt und beschrieben werden.

Eine erfindungsgemäß bevorzugte Vorrichtung ist eine solche, in der eine sogenannte Aufstromklassierung durchgeführt werden kann. Hier kann zweckmäßigerweise ein zylindrisches Rohr verwendet werden, das vorteilhafterweise mit einem Rührorgan im unteren Bereich oder einem sonstigen Organ zum Bewegen des Rohrinhalts ausgestattet sein sollte.

Es ist ferner erfindungsgemäß von Vorteil, daß ein Flüssigkeitsstrom von unten nach oben durch die Trennvorrichtung geleitet werden kann. Hierdurch kann die Trennung der Komponenten unterstützt werden. Die Flüssigkeit kann außerhalb der Trennvorrichtung auf die gewünschte Temperatur gebracht werden, die Trennvorrichtung selbst kann jedoch auch beheizbar sein. Das feinverteilte Einsatzgut wird bevorzugt seitlich in die Trennvorrichtung eingeführt. Die Zuführung kann an verschiedenen Stellen erfolgen, in Abhängigkeit von Verweilzeit, Strömungsgeschwindigkeit, Art der verwendeten Flüssigkeit, eingestellter Temperatur und Partikelgröße.

Verweilzeiten und Temperaturen werden ebenfalls in Abhängigkeit von der verwendeten Flüssigkeit und den sonstigen genannten Parametern gewählt.

Vorteilhaft ist es in zahlreichen Fällen, bei Raumtemperatur zu arbeiten. Die verwendete Temperatur sollte 80 °C nicht überschreiten. Die Trennung der Komponenten kann diskontinuierlich oder kontinuierlich erfolgen.

In den folgenden Beispielen ist die diskontinuierliche Versuchsdurchführung beschrieben.

### Beispiel 1

Das zerkleinerte und getrocknete Folienmaterial wird in einem senkrecht stehenden Glasrohr (40 mm Innendurchmesser, Höhe ca. 900 mm) bei Raumtemperatur mit einem C₉-Aromatenschnitt aus einem Platformer versetzt. Durch kräftiges Rühren werden die Flitter suspendiert und Farbstoffe von eventuell anhaftenden Aluminiumstücken separiert. Nach dem Suspendieren wird in die Glasröhre von unten Lösungsmittel eingepumpt, das die leichteren Anteile (Farbstoffe und Druckfarbe aufweisende Polyethylenfolie) nach oben spült. Der Überlauf wird in einem Filter aufgefangen. Das Filtrat kehrt in den Kreislauf zurück. Polyethylen und Farbstoffe werden unter den eingestellten Bedingungen nicht gelöst.

Als Lösungsmittelmenge wurden 2,2 Liter eingesetzt. Die Durchschnittspartikelgröße des Verbundmaterials betrug 6 mm. Die eingesetzte Menge des Verbundmaterials betrug 10 g. Die gesamte Trennzeit lag bei 5 Minuten, bei einer Strömungsgeschwindigkeit von 0,25 cm/s.

In der Apparatur ließ sich die Strömungsgeschwindigkeit bis auf 1,25 cm/s erhöhen. Bei höherer Strömungsgeschwindigkeit trat Fluten der Aluminium enthaltenden Folienanteile ein.

Es wurden 3,2 g Farbstoff/(Druckfarbe aufweisendes)Polyethylen erhalten und 6,2 g Aluminium/Polyethylen, anschließend wurden die Produkte gelöst wobei aus dem über Kopf abgenommenen Produkt ein grünlich gefärbtes Granulat und aus dem im unteren Bereich abgezogenen Produkt ein farbloses bzw. weißes Granulat erhalten wurde.

### Beispiel 2

wurde entsprechend **Beispiel 1** durchgeführt, die durchschnittliche Partikelgröße lag jedoch bei 4 mm. Es wurden ebenfalls 10 g Verbundmaterial eingesetzt. Die Trennzeit betrug 10 Minuten (0,15 cm/s). Es wurde bei Raumtemperatur und bei Strömungsgeschwindigkeiten zwischen 0,15 cm/s bis 0,35 cm/s gearbeitet, wobei bei letzterer Strömungsgeschwindigkeit Flutung eintrat. Es wurden 3,5 g Farbstoff/Polyethylen erhalten und 6,5 g Aluminium/Polyethylen.

Zur Entfernung von noch eventuell am Aluminium-Kunststoffverbund anhaftenden Celluloseresten kann die abgetrennte farbstoffreie Kunststoff-Aluminiumfraktion im Lösungsmittel erhitzt werden, wobei sich der Kunststoff löst. Durch eine weitere Aufstromklassierung bei erhöhter Temperatur kann die Cellulose am Säulenkopf entnommen werden. Das Aluminium fällt als reines Material an. Nach Abtrennen des Lösungsmittels wird ein hochwertiges farbloses bzw. weißes Polyethylen erhalten.

In den folgenden **Beispielen 3 bis 10** wurden jeweils 10 g Einsatzprodukt eingesetzt.

### Beispiel 3

Es wurde diskontinuierlich wie beschrieben gearbeitet. Jedoch wurde anstelle von C₉-Aromaten Toluol bei Raumtemperatur eingesetzt. Die Rührdrehzahl betrug 190 U/min. Die Trenndauer betrug 20 Minuten.
Es wurden 1,5 g Farbstoff/Polyethylengemisch erhalten und 8,5 g Verbundmaterial aus Aluminium und Polyethylen.

### Beispiel 4

Es wurde wie in **Beispiel 3** gearbeitet. Jedoch betrug die Trenntemperatur 50 °C.
Es wurden 2,9 g Farbstoff/Polyethylen-Gemisch und 7,1 g Aluminium/Polyethylen erhalten.

### Beispiel 5

Als Trennflüssigkeit wurde ein technischer Xylolschnitt aus einer Xylolanlage bei Raumtemperatur eingesetzt. Die sonstigen Bedingungen entsprachen denjenigen von **Beispiel 3.**
Es wurden 2,1 g Farbstoff/Polyethylen-Gemisch und 7,9 g Aluminium/Polyethylen erhalten.

### Beispiel 6

**Beispiel 5** wurde wiederholt, jedoch wurde bei 50 °C gearbeitet.
Es wurden 2,4 g Farbstoff/Polyethylen-Gemisch und 7,6 g Aluminium/Polyethylen erhalten.

### Beispiel 7

Es wurde wie in **Beispiel 3** gearbeitet, jedoch ein technischer C₁₀-Aromatenschnitt aus einer Ethylenanlage bei Raumtemperatur eingesetzt.
Es wurden 2,1 g Farbstoff/Polyethylen-Gemisch und 7,9 g Aluminium/Polyethylen erhalten.

### Beispiel 8

**Beispiel 7** wurde wiederholt, jedoch wurde bei 50 °C gearbeitet.
Es wurden 2,4 g Farbstoff/Polyethylen-Gemisch und 7,6 g Aluminium/Polyethylen Polyethylen erhalten.

### Beispiel 9

Es wurde wie in **Beispiel 3** gearbeitet, jedoch wurde Tetrahydrofuran bei Raumtemperatur eingesetzt.
Es wurden 2,7 g Farbstoff/Polyethylen-Gemisch und 7,3 g Aluminium/Polyethylen erhalten.

### Beispiel 10

**Beispiel 9** wurde wiederholt, jedoch wurde bei 50 °C gearbeitet.
Es wurden 4,6 g Farbstoff/Polyethylen-Gemisch und 5,4 g Aluminium/Polyethylen erhalten.

In der folgenden Tabelle ist ein typischer Aufbau eines mehrschichtigen Verbundfolienverpackungsmaterials wiedergegeben.

**Tabelle**

| | PE_{AB} | Karton | PE_{AB} | Al | HV | PE_{IB} | Pigmente |
|---|---|---|---|---|---|---|---|
| Anteil (g/m²) | 20 | 250 | 20 | 18 | 10 | 40-60 | 50·10⁻³ |
| Dichte (kg/m³ | 940 | | 940 | 270 | 940 | 940 | |
| Dicke (µ) | 21 | | 21 | 6,5 | 10 | 43-64 | |
| Anfall (Gew.-%) | 5,4 | 68 | 5,4 | 4,9 | 2,7 | 13,6 | |
| (Gew.-%) ohne Karton | 17 | - | 17 | 15 | 8,5 | 42,5 | |
| Die Verbundfolie besteht aus 6 Schichten: Der Polyethylen-Außenbeschichtung PE_{AB} Der Zellstoff-Schicht "Karton" Einer weiteren am Karton haftenden Polyethylen-Außenbeschichtung Der Aluminiumfolie Dem Haftvermittler HV Der Polyethylen-Innenbeschichtung PE_{IB} Der Karton ist außen bedruckt, die Pigmentmenge beträgt ca. 50·10⁻³ g/m³ Mit Hilfe der Figuren wird die Erfindung zusätzlich erläutert. | | | | | | | |

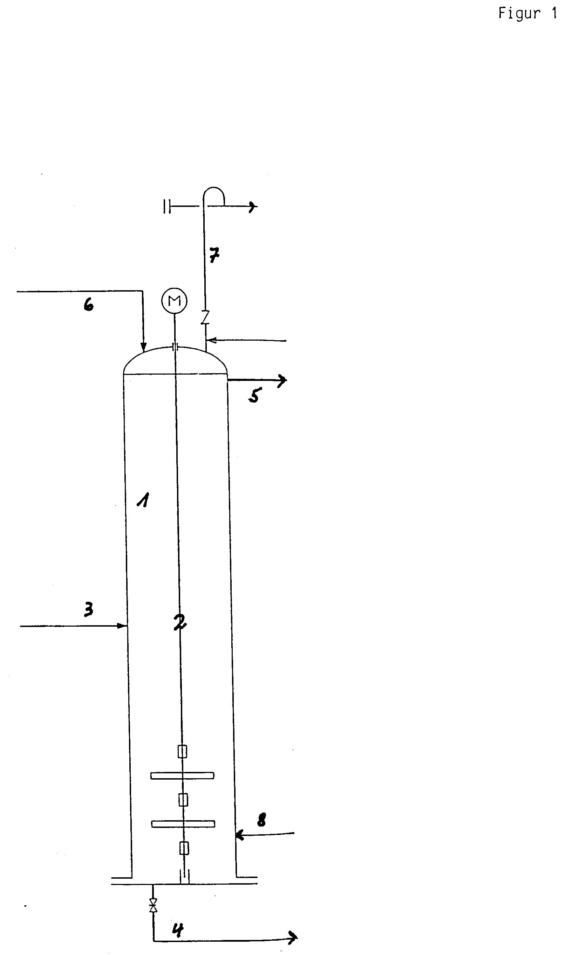

In **Figur 1** ist **1** eine zylindrische Trennvorrichtung, ausgestattet mit Rührer **2.** Bei **3** wird das zerkleinerte Einsatzprodukt zugeführt. Bei **4** wird der das Aluminium enthaltende Anteil des Verbundfolienmaterials entnommen und bei **5** das Gemisch aus Polyethylen und Farbstoff. Über **6** wird mit Inertgas beschleiert. Gasausgang ist **7.** Schließlich wird bei **8** zurückgewonnenes Lösungsmittel zugeführt.

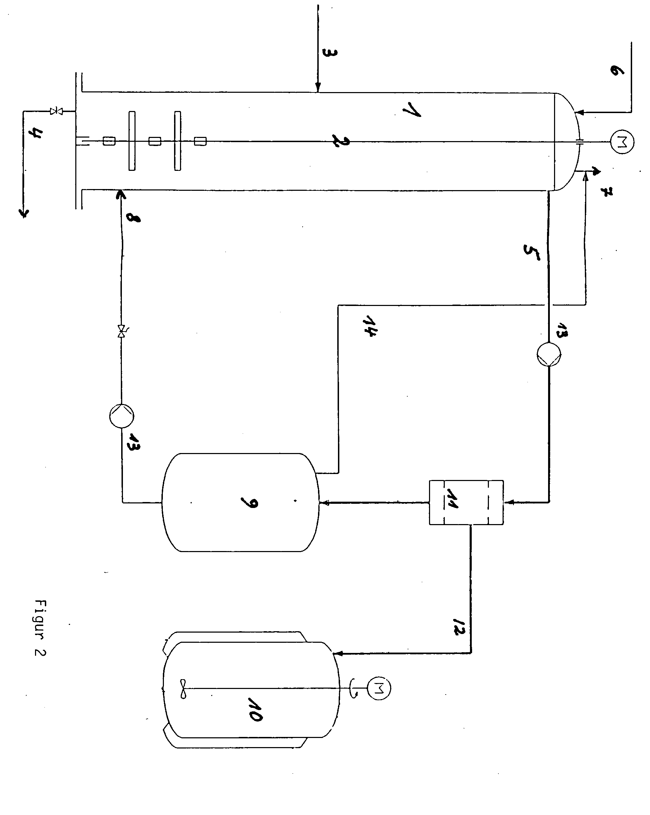

In **Figur 2** ist längs wie in **Figur 1** die Trennvorrichtung **1** dargestellt.

Das Farbstoff/(Druckfarbe aufweisendes)Polyethylen-Gemisch gelangt über **5** auf einen Filter **11.** Das Lösungsmittel fließt über Zwischenbehälter **9,** der über **14** an die Atmung angeschlossen ist, und Leitung **8** zurück nach **1.** Das Farbstoff/Polyethylen-Gemisch gelangt von **11** über Leitung **12** in den beheizbaren Rührbehälter **10,** wo es im Lösungsmittel aufgelöst wird. Das Lösungsmittel wird anschließend abgetrennt und das Polyethylen granuliert. Es ist verfärbt. **13** stellen Pumpen dar. Der Produktstrom 4 wird in einem Rührbehälter mit heißem Lösungsmittel gelöst. Man erhält eine farblose Polyethylen Lösung mit Aluminiumflittern. Nach dem Abtrennen des Aluminiums wird das Lösungsmittel entfernt und das Polyethylen granuliert.

Erfindungsgemäß ist es auch möglich, die Abtrennung der Druckfarbe herbeizuführen, ohne zunächst die Celluloseschicht zu entfernen. Die Flüssigkeit dringt hierbei in die Celluloseschicht ein, so daß ein Gemisch von Druckfarbe, äußerer zumindest teilweise mit Druckfarbe behafteter Polyethylenschicht und Cellulose vorliegt, die ebenfalls teilweise an der äußeren Polyethylenschicht haften kann. Daneben liegt der Al/PE-Folien-Anteil vor. Auch hier erfolgt die Trennung auf die Weise, daß äußere Polyethylenfolie, Druckfarbe und Papier nach oben steigen und der Al/PE-Teil nach unten sinkt.

Eine erfindungsgemäße Trennung ist auch bei Materialien möglich, die nicht die Form von Folien besitzen, sondern beispielsweise Platten-, Band-, Scheiben- und andere -Formen.

## Patentansprüche

1. Verfahren zur Abtrennung von Druckfarben aus Verbundmaterialien, wobei eine in den Verbundmaterialien ggf. vorhandene Papierschicht bevorzugt zunächst durch Wasser- und/oder Dampfanwendung abgetrennt wird, dadurch gekennzeichnet, daß das Verbundmaterial mit einer Flüssigkeit behandelt wird, in welcher sich die Druckfarben und/oder die Druckfarben aufweisende Folie von den übrigen Verbundmaterialien abtrennen und in der Flüssigkeit nach oben steigen.

2. Verfahren nach **Anspruch 1**, dadurch gekennzeichnet, daß die Behandlung des Verbundmaterials mit der Flüssigkeit bei einer Temperatur erfolgt, bei der sich das Thermoplastfolienmaterial nicht oder nur geringfügig löst.

3. Verfahren nach den **Ansprüchen 1 und 2**, dadurch gekennzeichnet, daß das Verbundmaterial aus Folien besteht.

4. Verfahren nach den **Ansprüchen 1 bis 3**, dadurch gekennzeichnet, daß die Flüssigkeit zumindest überwiegend ein C₉-Aromatenschnitt ist.

5. Verfahren nach den **Ansprüchen 1 bis 4**, dadurch gekennzeichnet, daß die Flüssigkeit in der Trennvorrichtung von unten nach oben strömt.

6. Verfahren nach den **Ansprüchen 1 bis 5**, dadurch gekennzeichnet, daß in einer säulenartigen Trennvorrichtung gearbeitet wird.

7. Verfahren nach den **Ansprüchen 1 bis 6**, dadurch gekennzeichnet, daß das Folienmaterial Polyethylen- und Aluminium-Folien enthält.

8. Verfahren nach den **Ansprüchen 1 bis 7**, dadurch gekennzeichnet, daß das zerkleinerte Verbundfolienmaterial seitlich in die Trennvorrichtung eingeführt wird.

9. Verwendung einer Trennvorrichtung, in der Einsatzmaterialien aufgrund unterschiedlicher Dichten getrennt werden können zur Abtrennung von Druckfarben aus Verbundmaterialien nach den **Ansprüchen 1 bis 8.**

10. Verwendung einer Flüssigkeit zur Abtrennung von Druckfarben aus Verbundfolien nach den Ansprüchen 1-8.
